# EUROPEAN PATENT SPECIFICATION

(11) **EP 0 825 038 B1**
(45) Date of publication and mention of the grant of the patent: **04.10.2001**
(21) Application number: 97103827.8
(22) Date of filing: 07.03.1997
(51) Int. Cl.: B41M 1/24, B44C 1/24, B29C 69/02, B41M 3/06

(54) **Method of manufacturing a multicoloured synthetic resin product with the appearance and texture of lace**
Verfahren zur Herstellung eines mehrfarbigen Kunstharzproduktes mit Aussehen und Textur einer Spitze
Procédé pour fabriquer un produit en résine synthétique multicolore ayant l'aspect et la texture de la dentelle

(30) Priority: 19.08.1996 JP 23717196
(43) Date of publication of application: 25.02.1998
(73) Proprietor: Yugengaisya Towa, Komaki-shi, Aichi-ken (JP)
(72) Inventor: Nakata, Akira, c/o Yugengaisya Towa, Komaki-shi, Aichi-Ken (JP)
(74) Representative: Kügele, Bernhard

(56) References cited:
- EP-A- 0 836 927
- DE-B- 1 245 993
- US-A- 3 455 756
- DATABASE WPI Section Ch, Week 9645 Derwent Publications Ltd., London, GB; Class A17, AN 96-450430 XP002086996 -& JP 08 224796 A (TOPPAN PRINTING CO LTD) , 3 September 1996
- DATABASE WPI Section Ch, Week 9832 Derwent Publications Ltd., London, GB; Class A32, AN 98-370528 XP002086997 -& JP 10 146940 A (AICA KOGYO CO LTD) , 2 June 1998
- DATABASE WPI Section Ch, Week 9644 Derwent Publications Ltd., London, GB; Class A32, AN 96-438184 XP002086998 -& JP 08 216250 A (KASAMATSU KAKO KENKYUSHO KK), 27 August 1996
- DATABASE WPI Section PQ, Week 9816 Derwent Publications Ltd., London, GB; Class P75, AN 98-173788 XP002086999 -& JP 10 035080 A (TOWA YG) , 10 February 1998

## Description

### Background of the Invention

The present invention relates to a method of manufacturing a synthetic resin multicolor colored lace pattern texture in which a flat lace part and a stereoscopic embossed pattern part are colored into multicolor by tones of color which are different from each other A method of manufacturing a synthetic plastic sheet with an embossed design is known from the document US-A-3 455 756. Foraminous plastics sheet material is used which simulates woven patterns of cane, lace, rattan, or similar fibrous materials. The plastic sheet, which may be a non-woven PVC sheet, is continuously embraced so that portions of the design extend beyond the plane of the sheet, and then the extruding portions are removed so that the sheet is of an open design. The sheet may be of laminated construction, it may also be printed before embossing.

Conventionally, a synthetic resin lace pattern texture has been known which has the flat lace part and the stereoscopic embossed pattern part.

However, with such a synthetic resin lace pattern texture it is difficult to color and print the flat lace and the stereoscopic embossed pattern part into different tones of color simultaneously with manufacture of the lace pattern part. Accordingly, the lace pattern texture has been manufactured and, thereafter, the lace pattern texture has been colored and printed successively, or the flat lace part and the embossed pattern part have separately been colored and printed by separate, respective steps.

In this manner, the conventional or prior-art method of manufacturing the synthetic resin multicolor colored lace pattern texture has had various problems, including that the steps are complicated, much time is consumed, color shearing is further generated in printed surfaces, and the printed surfaces are mixed in color.

### Summary of the Invention

In view of the above, the present invention solves such problems seen in the prior art, and has as its objectives to provide a method of manufacturing a synthetic resin multicolor colored pattern texture in which a synthetic resin lace pattern texture is formed and, simultaneously, in which a flat lace part and a stereoscopic embossed pattern part of the lace pattern texture are colored into different tones of color, whereby printed surfaces are not sheared from each other.

In order to achieve the above objectives, the present invention provides a method of manufacturing a synthetic resin lace pattern texture in which colored printing having different tones of color is applied to a flat lace part and a stereoscopic embossed pattern part, as defined in the appended claim and in which a recessed die having a lace pattern texture-which forms the flat lace part (root part) and the embossed pattern part (crest part)-is provided by cutting in a peripheral surface of a forming roll. Only a portion of the recessed die which forms the flat lace part (root part) which is provided by cutting within said forming roll is cut on the order of about 20 microns. The recessed die of the lace part which is flatter than the peripheral surface of the forming roll is positioned more inwardly than the recessed die of the embossed pattern. A root coloring mechanism and a crest coloring mechanism which supply inks different in color tones from each other and located in a root part and a crest part of the recessed die are arranged in opposed relation to an upper part of said forming roll. Dies which discharge molten synthetic resin are further provided in opposed relation to each other on the forming roll at a position lower than said coloring mechanism in a rotational direction of the forming roll. An ink having a predetermined tone of color is transferred, by each of said coloring mechanisms, to a predetermined position of the recessed die which is provided on the forming roll. The recessed die to which the ink is transferred is then filled with molten synthetic resin which is discharged from said die, in keeping with the rotation of the forming roll, whereby a synthetic resin lace pattern texture is formed. Simultaneously, multicolor color printing is applied to the synthetic resin lace pattern texture so that it is dissolved such that the printing surface of the synthetic resin lace pattern texture is sheared in color and is mixed in color.

### Brief Description of the Drawings

Fig. 1 is a top plan view showing a part of a synthetic resin multicolor colored pattern texture manufactured by the present invention;
Fig. 2 is a schematic view showing an arrangement of a manufacturing apparatus;
Fig. 3 is an enlarged schematic cross sectional view showing a step in which an ink is transferred to a recessed die forming an embossed pattern of a forming roll;
Fig. 4 is an enlarged schematic cross sectional view showing a step in which an ink is transferred to a recessed die forming a flat lace part of the forming roll; and
Fig. 5 is a schematic view showing an arrangement of a manufacturing apparatus further including a step of coating both front and rear surfaces with transparent films.

### Description of the Preferred Embodiment

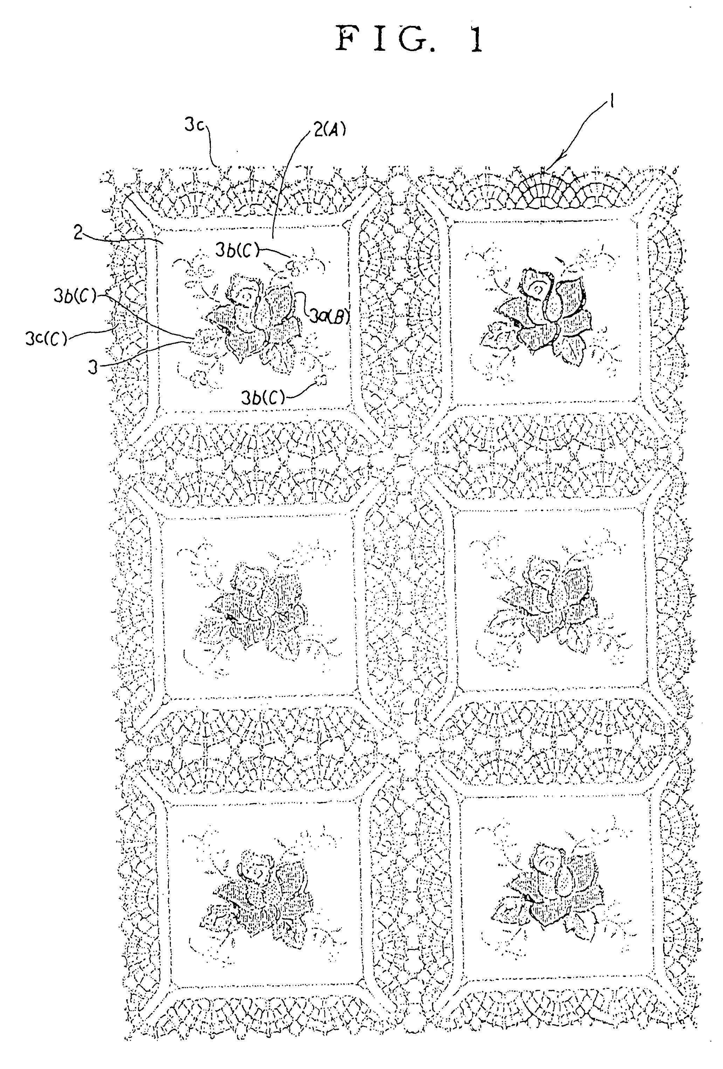

A method of manufacturing a synthetic resin multicolor colored lace pattern texture according to the present invention will hereunder be described with reference to the drawings. Fig. 1 is a top plan view showing a part of a synthetic resin multicolor colored pattern texture manufactured by the present invention. This synthetic resin multicolor colored lace pattern texture 1 (hereinafter, referred to as "colored lace pattern texture 1") is provided with a floral pattern 3a and a leaf, stalk and bine pattern 3b of a stereoscopic embossed pattern part 3 at the center of a rectangular flat lace part 2. An arrangement in which a trimming pattern 3c of the embossed pattern part 3 is disposed outside the flat lace part 2 is considered as a unit design. A plurality of such units are connected to each other and thereby formed in an elongated manner.

This is an embodiment in which the flat lace part 2 is colored to a tone of color A, the floral pattern 3a of the embossed pattern part 3 is also colored to a tone of color B and, further, the leaf, stalk and bine pattern 3b and the trimming pattern 3c of the embossed pattern part are colored to a tone of color C.

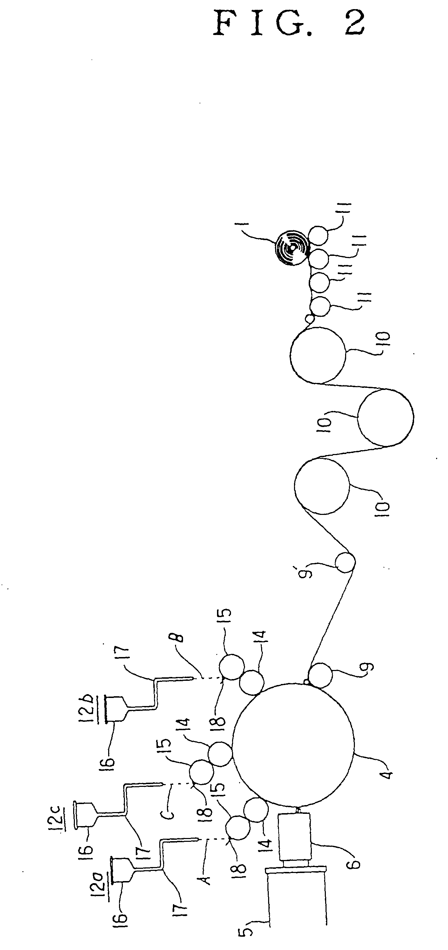

Next, a method of manufacturing the colored lace pattern texture 1 in which the flat lace part 2 and the stereoscopic embossed pattern part 3 are colored, in a multicolor manner, into three colors including the tones of color A, B and C, will be described. Fig. 2 is a view showing a summary of an arrangement of a manufacturing apparatus. In the figure, numeral 4 denotes a forming roll, and a recessed die h1 for forming a flat lace part 2 on a peripheral surface of the forming roll 4, a recessed die h2 for forming the floral pattern 3a of the embossed pattern 3, and a recessed die h3 for forming the leaf, stalk and bine pattern 3b and the trimming pattern 3c are provided by cutting, respectively, at predetermined positions. The recessed die h1 for forming the flat lace part 2 is such that the peripheral surface of the forming roll 4 is cut on the order of about 20 microns, and the recessed die h1 of the lace part 2 flatter than the peripheral surface of the forming roll 4 is positioned more inwardly than the recessed dies h2 and h3 of the embossed pattern 3.

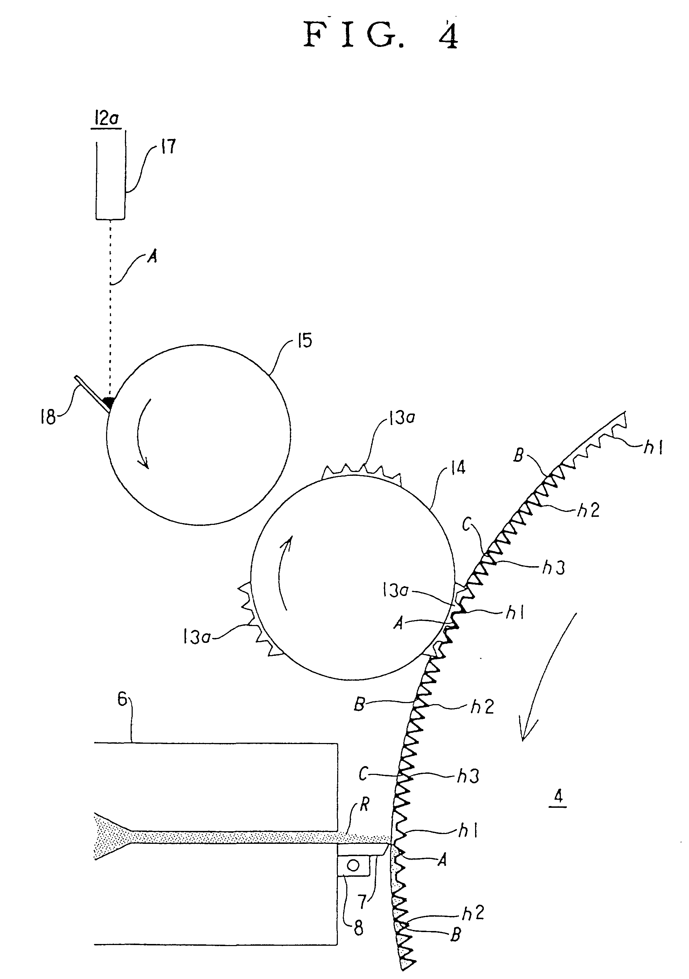

A die 6 which is connected to a forward end of an extruder 5 has an outlet thereof which is opposed against a position substantially horizontal with respect to an axis of the forming roll 4. A doctor 7 is mounted below an outlet of this die 6, as shown in Fig. 4, and a forward end thereof is opposed against the peripheral surface of the forming roll 4. A heater 8 is mounted to a lower surface of the doctor 7.

An induction roll 9 and 9' are disposed at a side opposite to the die 6 of the forming roll 4, as shown in Fig. 2.

Numeral 10 denotes a group of cooling rolls and numeral 11 denotes a group of take-up rolls.

Numerals 12a to 12c denote coloring mechanisms; these coloring mechanisms 12a to 12c are disposed at an upper position of the forming roll 4. The forming roll 4 possesses a relief rubber roll 14 in which convex dies 13a to 13c corresponding to the recessed dies h1 to h3 which are provided by cutting with the forming roll 4 are disposed at a predetermined position, a mesh roll 15, and an ink tank 16 with a lid, which holds an ink which is supplied to the mesh roll 15. Inks having predetermined tones of color A, B and C are supplied from the ink tank 16 to the mesh roll 15 through a flexible tube 17. A doctor 18 is opposed axially against a peripheral edge surface of the mesh roll 15. Further, the flexible tube 17 has a forward end thereof which is so arranged as to be reciprocated axially of the mesh roll 15. Thus, the arrangement is such that the ink is supplied to the mesh roll 15 through the doctor 18 without spots or blemishes.

In the manufacturing apparatus shown in Fig. 2, the coloring mechanisms 12b and 12c serve as crest coloring mechanisms for coloring the embossed pattern part 3, and the coloring mechanism 12a serves as a root coloring mechanism which colors the flat lace part 2 so that the manufacturing apparatus is adapted for use.

In view of the above, the arrangement is such that the coloring mechanism 12b supplies the ink having the tone of color B which colors the floral pattern 3a of the embossed pattern part 3, and such that the ink having the tone of color C which colors the leaf, stalk and bine pattern 3b and the trimming pattern 3c of the embossed pattern part 3 is supplied from the coloring mechanism 12c, and the ink having the tone of color A, which colors the flat lace part 2, is supplied from the coloring mechanism 12a.

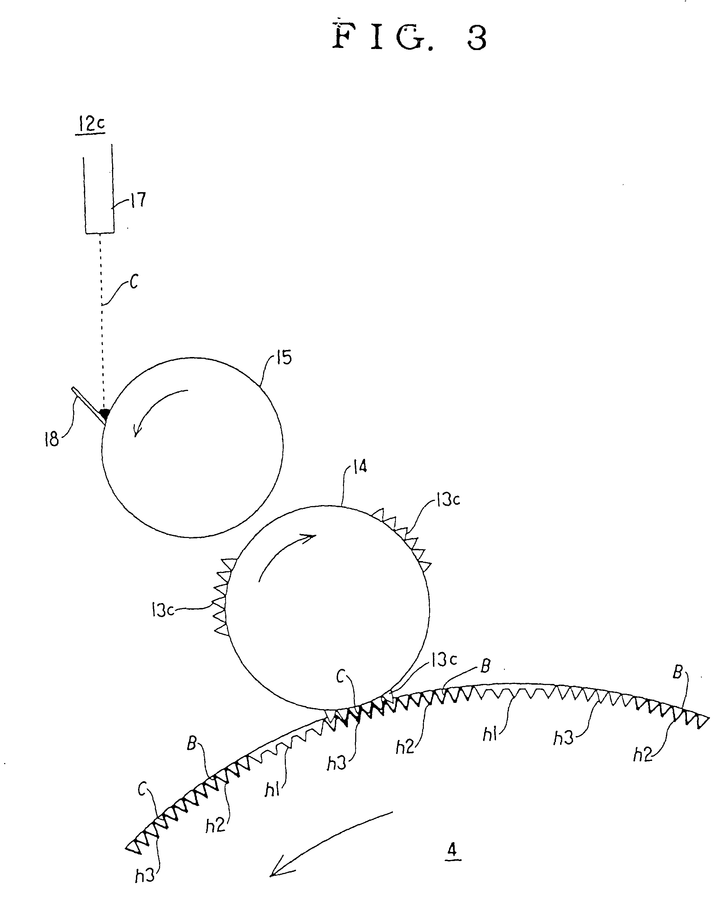

First, a step of transferring the inks having the tones of colors B and C to the recessed dies h2 and h3 of the forming roll 4 by the coloring mechanisms 12b and 12c will be described. In this embodiment, a procedure will be described with reference to Fig. 3, in which the ink having the tone of color B is transferred to the recessed die h2 of the forming roll 4 by the coloring mechanism 12b and, thereafter, the ink having the tone of color C is transferred to the recessed die h3 of the forming roll 4 by the coloring mechanism 12c. Procedurally, however, the operations for transferring the inks having the tones of color B and C to the recessed dies h2 and h3 of the forming roll 4 are completely identical.

Fig. 3 shows a state in which the ink having the tone of color B has already been transferred to each of the recessed dies h2 of the forming roll 4 by the coloring mechanism 12b. Then, the forming roll 4 is rotated in the direction indicated by an arrow so that the ink having the tone of color C, which is adhered to each of the convex dies 13c of the relief rubber roll 14 of the coloring mechanism 12c, is transferred to each of the recessed dies h3 and, successively, the forming roll 4 is rotated so that the ink having the tone of color A, which is adhered to the convex dies 13a of the relief rubber roll 14 of the coloring mechanism 12a, is transferred to each of the recessed dies h1 of the forming roll 4, as shown in Fig. 4.

In this manner, the forming roll 4 in which the inks having the tones of colors A, B and C are transferred to each of the recessed dies h1 to h3 is rotated so that molten synthetic resin R which is discharged from an outlet of the dies 6 is entered to filling within each of the recessed dies h1 to h3, whereby the colored lace pattern texture 1-which the inks having the tones of color A, B and C, which are transferred to each of said recessed dies h1 to h3, are heated and fused to the surface of the synthetic resin, which is colored in multicolor-is manufactured continuously. The colored lace pattern texture 1 which is manufactured continuously in this manner is cooled in a process which passes through the group of cooling rollers 10, through the induction roller 9 and 9', in keeping with rotation of the forming roll 4, and is wound into the form of a coil by the group of take-up rolls 11.

In this manner, in the manufacturing method according to the present invention, the flat lace part 2 and the embossed pattern part 3 are colored to the tones of colors A, B and C, which are different from each other, simultaneously with the manufacturing of the colored lace pattern texture 1. Moreover, the embossed pattern part 3 is such that the floral pattern 3a is colored to the tone of color B, and the other part is colored to the tone of color C through a division of color. Furthermore, these tones of colors A, B and C are clearly colored without the formation of a boundary line between the flat lace part 2 and the embossed pattern part 3, and without improper color or mixturing, because the peripheral surface of the forming roll 4 is shaved on the order of about 20 microns at a portion of the recessed die hi which colors the flat lace part 2, and the recess die h1 of the lace part 2 which is flatter than the peripheral surface of the forming roll 4 is positioned more inwardly than the recessed dies h2 to h3 of the embossed pattern 3.

In the preferred embodiment shown in the diagrams, an arrangement is shown which is colored in three colors including the tones of color A, B and C. However, by increasing the diameter of the forming roll 4, for example, the coloring mechanisms 12a to 12c are also increased thereby making it possible to color in multicolor of three or more colors. Thus, it is possible to manufacture the colored lace pattern texture 1 which is multicolored in three or more colors.

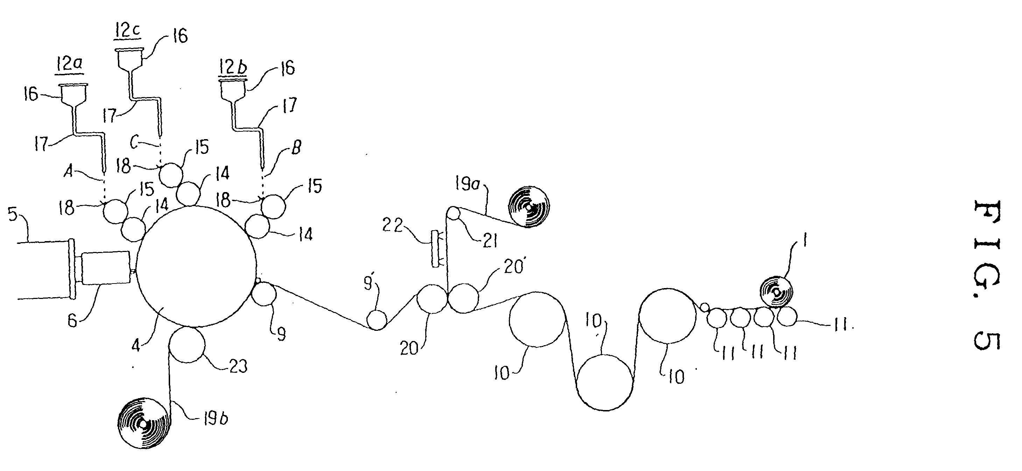

Fig. 5 shows an apparatus configuration which coats and protects the manufactured colored lace pattern texture 1 with a transparent resin film to add scale or fouling-prevention and water-proofing. The arrangement shown in Fig. 5 is a summary view of a step of coating both front and rear surfaces of the colored lace pattern texture 1 with the transparent films 19a and 19b. Both surfaces of the colored lace pattern texture 1 are coated with the transparent films 19a and 19b through a process of transferring the colored lace pattern texture 1 which is manufactured as described with reference to Fig. 2, and which is transferred through the induction rolls 9 and 9'.

The transparent film 19a which coats the surface is such that the transparent film 19a wound in the form of a coil is disposed above pressure rolling 20 and 20'-which are provided in opposition at the midpoint between the induction rolls 9 and 9' and the first cooling roll 10 and is suspended through a guide roll 21, is overlapped with the surface of the colored lace pattern texture 1 under such a condition that a side surface thereof is heated by a heater 22, and is pressurized the pair of pressure rolling 20 and 20', thereby adhering it to the surface of the colored lace pattern texture 1.

Conversely, the transparent film 19b which coats the rear or back surface is supplied onto the urging roll 23, which is so disposed as to be in contact with the forming roll 4 and is overlapped with the front surface of the colored lace pattern texture 1 which is not yet hardened completely. Then, the transparent film 19b is transferred into the induction rolls 9 and 9' while being pressurized, by the forming roll 4 and the pressure rolling 23, and is put together with the transparent film 19a, which coats the surface, by the pair of pressure rollings 20 and 20'. Then, pressure is added and the two films are adhered together.

Fig. 5 shows the arrangement in which both front and rear surfaces of the colored lace pattern texture 1 are coated with the transparent films 19a and 19b, and are protected therewith. However, the coating protection due to the transparent film is not limited to this. Only one side-the front surface or the rear surface-may be coated and protected.

As described above, the method of manufacturing the synthetic resin multicolor colored lace pattern texture, according to the present invention, is such that the inks which have different tones of color are supplied from a plurality of coloring mechanisms which are disposed on the forming roll. These inks are transferred to the predetermined position of the recessed die which is provided on the forming roll, and the molten synthetic resin is subsequently entered to filling within said recessed die. In this way, it is possible to continuously manufacture the synthetic resin multicolor colored lace pattern texture in which the flat lace part and the stereoscopic embossed pattern part are colored in different tones of color. Accordingly, not only is the manufacturing apparatus naturally simplified, the manufacturing steps are simplified as well. Thus, it is naturally possible to reduce the manufacturing cost, and it is also possible to form a clean colored lace pattern texture printed in multicolor in which the coloring printed on the synthetic resin multicolor colored lace pattern texture has no color shearing and no mixture in color.

## Claims

1. A method of manufacturing a synthetic resin lace pattern texture (1) having a flat lace portion (2) and an embossed pattern portion (3) to which colour printing is applied with respectively different tones of colour (A, B, C), comprising the steps of:
preparing a forming roll (4), root colouring means (12a) for supplying ink to said flat lace portion (2), crest colouring means (12b, 12c) for supplying ink to said embossed pattern portion (3), and a die (6) for discharging molten synthetic resin (R);
cutting the circumferential surface of said forming roll (4) to provide a recessed die (h1) of a lace pattern being formed with a recessed die (h2, h3) of said embossed pattern portion (3);
further cutting only said recessed die (h1) of said flat lace portion (2) by about 20 microns such that said recessed die (h1) of said flat lace portion (2) is positioned closer to the rotational axis of said forming roll (4) than said recessed die (h2, h3) of said embossed pattern portion (3);
disposing said root colouring means (12a) and said crest colouring means (12b, 12c) opposite to and above said forming roll (4) for respectively supplying inks different in colour to said flat lace portion (2) and said embossed pattern portion (3);
disposing said die (6) opposite to said forming roll (4) under said root colouring means (12a) and said crest colouring means (12b, 12c) in a rotational direction of said forming roll (4);
respectively transferring inks having predetermined tones of colour (A, B, C) from said root colouring means (12a) and said crest colouring means (12b, 12c) to predetermined positions of said recessed die (h1) of said flat lace portion (2) and said recessed die (h2, h3) of said embossed pattern portion (3) on said forming roll (4); and
filling said recessed dies (h1-h3) to which said inks are transferred with molten synthetic resin (R) discharged from said die (6) while rotating said forming roll (4), thereby forming said synthetic resin lace pattern texture (1) simultaneously with applying a multicolour printing to said synthetic resin lace pattern texture (1).

## Patentansprüche

1. Verfahren, eine Kunstharz-Spitzenmustertextur (1) herzustellen, die einen flachen Spitzenteil (2) und einen Prägemusterteil (3) hat, auf die Farbdruck mit verschiedenen Farbtönen (A, B, C) angewendet wird, die Schritte umfassend:
eine Patrizenwalze (4), Grundfärbemittel (12a) zur Druckfarbenlieferung an den benannten flachen Spitzenteil (2), Rippenfärbemittel (12b, 12c) zur Druckfarbenlieferung an den benannten Prägemusterteil (3) und einen Spritzkopf (6) zum Ausstoss von geschmolzenem Kunstharz (R) vorzubereiten;
die Umfangsfläche der benannten Patrizenwalze (4) zu schneiden, um eine Hohlform (h1) des sich bildenden Spitzenmusters mit einer Hohlform (h2, h3) des benannten Prägemusterteils (3) zu versehen;
weiter nur die benannte Hohlform (h1) des benannten flachen Spitzenteils (2) um etwa 20 µm zu schneiden, so dass die benannte Hohlform (h1) des benannten flachen Spitzenteils (2) näher zur Drehachse der benannten Patrizenwalze (4) liegt als die benannte Hohlform (h2, h3) des benannten Prägemusterteils (3);
die benannten Grundfärbemittel (12a) und die benannten Rippenfärbemittel (12b, 12c) gegenüber und über der benannten Patrizenwalze (4) anzuordnen, um betreffende Druckfarben verschiedener Farbe zu dem benannten flachen Spitzenteil (2) und dem benannten Prägemusterteil (3) zu liefern;
den benannten Spritzkopf (6) gegenüber der benannten Patrizenwalze (4) in einer Drehrichtung der benannten Patrizenwalze (4) unter den benannten Grundfärbemitteln (12a) und den benannten Rippenfärbemitteln (12b, 12c) anzuordnen;
Druckfarben mit vorbestimmten Farbtönen (A, B, C) von den benannten Grundfärbemitteln (12a) und den benannten Rippenfärbemitteln (12b, 12c) zu vorbestimmten Stellen der benannten Hohlform (h1) des benannten flachen Spitzenteils (2) und zu der benannten Hohlform (h2, h3) des benannten Prägemusterteils (3) auf der benannten Patrizenwalze (4) zu übertragen; und
die benannten Hohlformen (h1-h3), zu denen die benannten Druckfarben übertragen wurden, mit geschmolzenem Kunstharz (R) zu füllen, das aus dem benannten Spritzkopf (6) ausgestossen wird, während die benannte Patrizenwalze (4) gedreht wird, dadurch die benannte Kunstharz-Spitzenmustertextur (1) gleichzeitig mit der Anwendung von Vielfarbendruck auf die benannte Kunstharz-Spitzenmustertextur (1) zu bilden.

## Revendications

1. Procédé de fabrication d'une texture en résine synthétique à configuration de dentelle (1) présentant une partie plane en dentelle (2) et une partie à configuration emboutie (3) sur laquelle on applique une impression en couleur avec des nuances de couleur respectivement différentes (A, B, C), comprenant les étapes consistant à :
préparer un rouleau de formation (4), un moyen de coloration de fond (12a) pour l'alimentation en encre de ladite partie plane en dentelle (2), des moyens de coloration de crête (12b, 12c) pour l'alimentation en encre de ladite partie à configuration emboutie (3) et une matrice (6) pour la décharge de la résine synthétique fondue R :
découper la surface périphérique dudit rouleau de formation (4) afin de fournir une matrice encastrée (hl) d'une configuration en dentelle étant formée avec des matrices encastrées (h2, h3) de ladite partie à configuration emboutie (3) ;
découper de plus seulement ladite matrice encastrée (hl) de ladite partie plane en dentelle (2) sur environ 20 microns d'une manière telle que ladite matrice encastrée (hl) de ladite partie plane en dentelle (2) est placée plus près de l'axe de rotation dudit rouleau de formation (4) que lesdites matrices encastrées (h2, h3) de ladite partie à configuration emboutie (3) ;
disposer ledit moyen de coloration de fond (12a) et lesdits moyens de coloration de crête (12b, 12c) en face et au-dessus dudit rouleau de formation - (4) pour l'alimentation respective en encres de différentes couleurs à ladite partie plane en dentelle (2) et de ladite partie à configuration emboutie (3) ;
disposer ladite matrice (6) en face dudit rouleau de formation (4) au-dessus dudit moyen de coloration de fond (12a) et desdits moyens de coloration de crête (12b, 12c) dans une direction angulaire dudit rouleau de formation (4) ;
transférer respectivement les encres de nuances de couleur prédéterminées, dudit moyen de coloration de fond (12a) et desdits moyens de coloration de crête (12b, 12c) jusqu'à des points prédéterminés de ladite matrice encastrée (6) de ladite partie plane en dentelle (2) et desdites matrices encastrées (h2, h3) de ladite partie à configuration emboutie (3) sur ledit rouleau de formation (4) ; et
remplir lesdites matrices encastrées (h1 à h3) auxquelles sont transférées lesdites encres par de la résine synthétique fondue R déchargée de ladite matrice (6) pendant que tourne ledit rouleau de formation (4), formant ainsi ladite texture de dentelle en résine synthétique (1). en appliquant simultanément une impression multicolore à ladite texture de dentelle en résine synthétique (1).
